# EUROPEAN PATENT SPECIFICATION

(11) **EP 1 647 749 B1**
(45) Date of publication and mention of the grant of the patent: **19.03.2008**
(21) Application number: 04425771.5
(22) Date of filing: 12.10.2004
(51) Int. Cl.: F16K 17/28, D06F 75/12

(54) **Aerating valve, particularly for a steam generation apparatus**
Belüftungsventil, insbesondere für einen Dampferzeuger
Soupape d'aération, en particulier pour un appareil générateur de vapeur

(43) Date of publication of application: 19.04.2006
(73) Proprietor: Olab S.r.l., 25030 Torbole Casaglia (Brescia) (IT)
(72) Inventor: Bottura, Cesare, 25100 Brescia (IT)
(74) Representative: Modiano, Micaela Nadia

(56) References cited:
- EP-A- 0 837 272
- FR-A- 2 684 735
- GB-A- 190 904 191
- PATENT ABSTRACTS OF JAPAN vol. 009, no. 018 (M-353), 25 January 1985 (1985-01-25) & JP 59 164468 A (GASUTOTSUPU KOGYO KK), 17 September 1984 (1984-09-17)

## Description

The present invention relates to an anti-depression valve, particularly for a steam generation apparatus. More particularly, the invention relates to an anti-depression valve that can also be integrated in an electric valve.

As is known, the most widespread type of household apparatus for steam generation always has at least one resistor, which is integrated within a boiler in order to bring the water to the boiling point, and an electric valve, which dispenses the generated steam, directing it toward the user device (for example an iron, a floor cleaning brush, et cetera).

One of the problems more often encountered in the operation of devices for generating pressurized steam is the possible outflow of condensation during initial dispensing.

When the steam apparatus is powered electrically, the water contained in the boiler, which is heated by the resistor, in fact boils, generating steam that fills the empty volume of the boiler and the output duct, from which it is then extracted under the control of the user by operating the corresponding electric valve.

By making contact with the walls of the boiler and of the output duct (which are still cold), the steam condenses and, due to the pressure generated by the boiler, the condensation is conveyed into the steam extraction area, flowing out in the form of droplets, which can cause burns to the user because of their high temperature.

Moreover, the water sprays are an unpleasant drawback, since they can stain the clothing being ironed, if the apparatus being considered is an iron, because the condensed water entrains sludge, scale flakes and dirt more than steam does.

Another drawback arises when the electric current no longer supplies power to the resistor (i.e., when the apparatus is switched off): in this case, the cooling of the air above the free surface of the water inside the boiler causes in fact a pressure drop. This phenomenon often continues until negative pressure values are reached, i.e., the boiler is in depression with respect to the surrounding environment and with respect to all the devices connected to it.

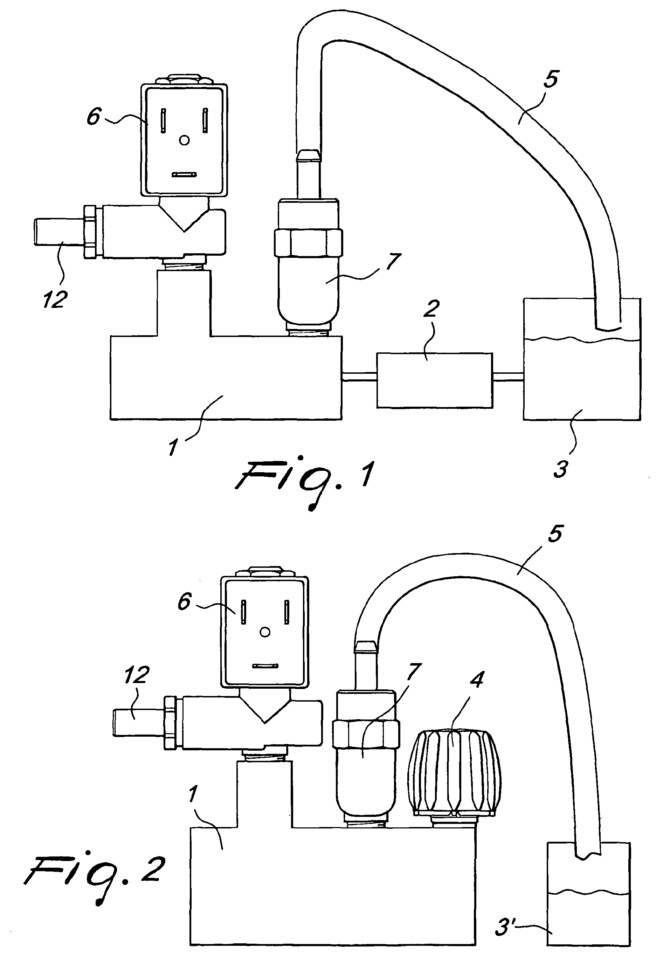

Figure 1 schematically illustrates a boiler 1, to which a pump 2 that draws water from a tank 3 at atmospheric pressure is connected. In this case, the depression may draw water into the boiler 1 from the tank 3 through the pump 2 until a balance is reestablished. This may entail excessive filling of the boiler with water, with a consequent increase in steam generation times the next time the boiler is switched on and with a further worsening of the discharge of condensation during initial steam dispensing.

If instead the configuration of the apparatus is the one shown in Figure 2, the depression generated in the boiler 1 becomes evident only when the top-up plug 4 of the boiler is opened, by means of the characteristic air suction sound, without however causing operating drawbacks.

In order to obviate the two mentioned drawbacks, it is known to resort to valves that have the double function of allowing to discharge the condensation through a tube 5 (see Figures 1 and 2) into the tank 3 or 3' (see Figure 2). Discharge of the condensation through the tube 5 occurs during the first moments in which the devices are switched on. Such valves are also designed to draw air from the condensation outflow duct in order to allow the spontaneous balancing of the pressure in the boiler with respect to the atmospheric pressure during cooling (since the other devices connected to the boiler 1, i.e., an electric valve 6 and a safety valve 12, are both closed).

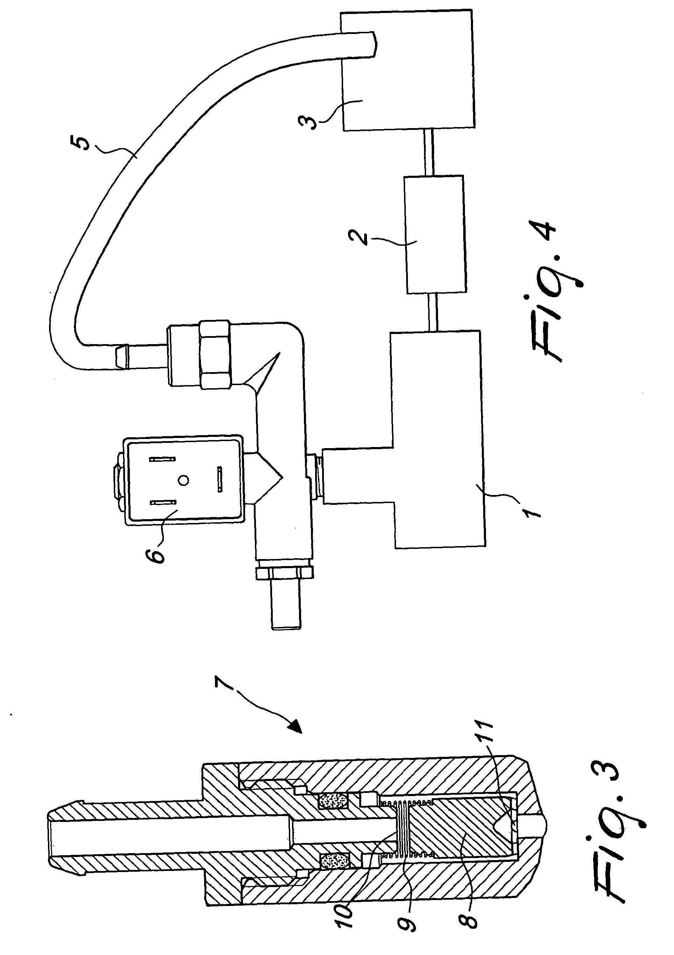

In the background art, these valves, shown in Figure 3 in a sectional view and of the normally-open type, are provided by means of an elastomer gasket 8, which is biased by an appropriately sized spring 9. Said valves remain open until the pressure below the gasket is able to overcome the force of the spring. When this occurs, the gasket rests against the sealing seat 10, closing the passage. The pressure required to close the discharge path is on the order of 0.2 bar. Up to that moment, condensation can be discharged into the recovery tank 3 or 3' through the open passage.

The main drawbacks that can be observed in this type of valve can be listed as follows:
the spring 9 necessarily has to be very soft, in order to allow closure within a few tenths of a bar. Accordingly, the dimensions of the transverse cross-section of the wire that constitutes the spring are limited and therefore the springs are highly sensitive to corrosion, are difficult to handle during assembly and to keep in the correct position.

Moreover, the spring requires an adequate seat that allows it to operate in appropriate retention conditions.

The spring acts as a guide for the movement of the gasket: if this does not occur perfectly in axial alignment with the sealing seat, seepage can occur until the pressure reaches significant values, greater (more than 1 bar) than the threshold that is sufficient to allow complete evacuation of the condensation.

Moreover, the gasket must be shaped appropriately so as to allow it to close the opening in the sealing seat 10, but prevent it from closing the upstream opening 11, since the air must be aspirated through said opening in order to perform the anti-depression function.

Finally, the anti-depression valve thus constructed is usually applied as a component that is independent of the remaining devices provided in the household appliance and is not integrated in other components.

PATENT ABSTRACTS OF JAPAN vol. 009, no. 018 (M-353) (JP 59164468) discloses an excess flow preventing valve including a vertical cylinder having an upper tapered valve seat for a ball valve and a lower cylindrical part for the ball valve and defining side openings communicating between the outside and inside of the cylindrical part.

EP-A-0 837 272 discloses a ball valve element which slides within a bush having an inner diameter substantially equal to the ball valve element which slides therein into engagement with a sealing O-ring.

The aim of the present invention is to provide an anti-depression valve, particularly for steam generation apparatuses, which allows to discharge the condensation that forms when the device is switched on and to compensate for the depression between the boiler and the outside environment during cooling, overcoming the drawbacks of known types of anti-depression valve.

Within this aim, an object of the present invention is to provide an anti-depression valve that does not use springs to guide and bias the gasket.

Another object of the present invention is to provide an anti-depression valve that can be integrated in the electric valve for dispensing steam.

Another object of the present invention is to provide an anti-depression valve that is highly reliable, relatively simple to manufacture and at competitive costs.

In accordance with the invention, there is provided an anti-depression valve as defined in the appended claims.

Further characteristics and advantages of the invention will become better apparent from the description of a preferred but not exclusive embodiment of the valve according to the invention, illustrated by way of non-limiting example in the accompanying drawings, wherein:
Figure 1 illustrates the use of a known type of anti-depression valve in a steam generation apparatus;
Figure 2 illustrates the use of a known type of anti-depression valve in a steam generation apparatus according to a second embodiment;
Figure 3 is a transverse sectional view of an anti-depression valve of a known type;
Figure 4 illustrates a steam generation apparatus with an anti-depression valve according to the present invention;
Figure 5 is a schematic view of the anti-depression valve according to the present invention;
Figure 6 is a transverse sectional view of the anti-depression valve according to the invention in the open position;
Figure 7 is a transverse sectional view of the valve according to the invention during the discharge of condensation in a horizontal position;
Figure 8 is a transverse sectional view of the valve according to the present invention during discharge of condensation in a vertical position;
Figure 9 is a transverse sectional view of the valve according to the present invention in the closed condition;
Figure 10 is a sectional view of a detail of the valve shown in Figure 9; and
Figure 11 is a transverse sectional view of the valve according to the invention, shown open during the anti-depression step.

With reference to the figures and particularly with reference to Figures 4 to 11, in which reference numerals that are identical to the ones of the preceding figures designate identical elements, the anti-depression valve according to the present invention, generally designated by the reference numeral 100, comprises a valve body 101, which is provided with a mechanical connector 102, preferably of the threaded type, for fitting to the boiler 1, and with a mechanical connector 103, also preferably of the threaded type, for connection to a nipple 104.

The body 101 is provided with at least one axial duct 105 for connecting the boiler 1 to the valve 100 and with at least one radial duct 106, which is described in detail hereinafter.

The body 101 may also be advantageously integrated in the body of the electric valve, as will be described hereinafter.

The nipple 104 is screwed onto the connector 103 of the body 101 and is provided with a passage duct 107 and with a sealing seat 108. A bush 109 is arranged inside the nipple 104.

Said bush is gripped between the sealing seat 108 of the nipple 104 and a sealing ring 110 preferably made of annealed metal (such as copper or aluminum). The seal of the coupling is ensured by the plastic deformation of the ring 110, which is compressed by the bush 109 when the nipple 104 is tightened fully.

The bush 109 is further provided with a protrusion 111, which is adapted to form a seat for a gasket 112, preferably of the O-ring type.

Moreover, the bush 109 has a conical surface 113, which completes the protrusion 111 that forms the seat for accommodating the gasket 112.

A preferably metallic ball 115 completes the anti-depression valve according to the invention. The ball may advantageously be provided with a non-stick surface treatment, such as chemical nickel plating plus PTFE.

With reference to the figures cited above, operation of the anti-depression valve according to the invention, whether integrated in the electric valve or independent, is as follows.

When the pressure in the boiler increases due to the boiling of the water, since the passage ducts of the electric valves and of the safety valve are both closed, the steam generated during the first moments of operation of the apparatus and the condensation can only flow through the valve 100, which by being open connects the boiler directly to the outside.

During this step, the steam and the condensation that has formed due to the contact of said steam with the cold walls pass through the ducts 105 and 106 of the body 101 of the valve 100 and exit from them through the duct 107. The condensation can thus be collected in an appropriate recovery tank 3.

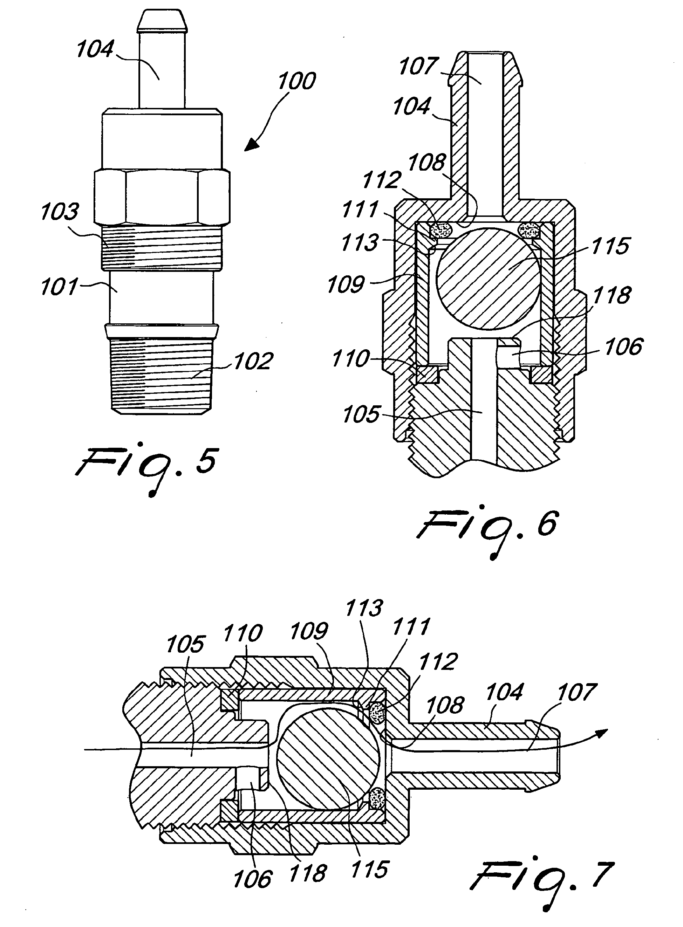

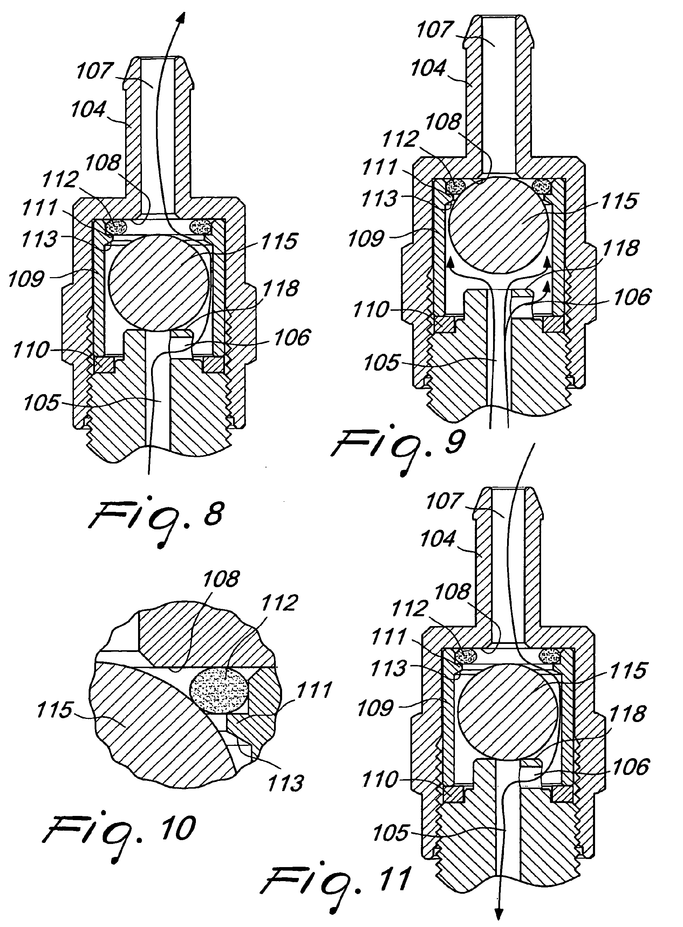

During this step, the ball 115 is in any open position (i.e., it makes no contact with the gasket 112, as shown for example in Figure 7 or in Figure 8). Figure 7 illustrates the possibility to fit the valve 100 so that its axis is horizontal; however, in view of the possibility to utilize the weight of the ball 115 as a pressure balancing element, operation of the valve 100 is facilitated by an assembly position in which it has a vertical axis, as shown in Figure 6 and in Figures 8 to 11.

In this case, the very weight of the ball 115 in fact tends to make it rest against a supporting seat 118 on the body 101 of the valve 100, but this does not prevent the fluid from passing through the valve by means of the radial duct 106.

When the pressure reaches values on the order of a few tenths of a bar, the ball 115 acts as a float and is thus propelled in the direction of the flow. This is assisted by the appropriate sizing of the diameter of the ball 115 and of the diameter of the sliding seat provided in the bush 109. The person skilled in the art will understand that correct sizing entails for example providing a radial play on the order of 5-10% of the diameter of said ball between said ball and its sliding seat.

Moreover, the appropriate choice of the weight of the ball 115 helps to determine the value of the valve closure pressure (differently from the background art, in which this had to be achieved by appropriately sizing the contrast spring).

When the pressure reaches a sufficient value, the ball 115 rests on the gasket 112, as shown for example in Figures 9 and 10. This is allowed by the appropriate sizing of the seat formed by the protrusion 111 and by the conical surface 113 of the bush 109 and by the choice of a gasket 112 that has a chord diameter that is adapted for the diameter selected for the ball 115.

The ball 115 must in fact protrude from the conical seat 113 and make contact with the chord of the gasket 112 before resting against the conical surface 113. The movement that the ball 115 is capable of performing from when contact with the gasket 112 begins until contact with the conical surface 113 occurs must be sufficient to produce a compression of the gasket 112 equal to approximately 10-20% of the chord diameter.

When this occurs, the valve closes and prevents further flow of liquid from the boiler 1 to the recovery tank.

Figures 9 and 10 illustrate this situation in detail.

In the meantime, however, the pressure generated inside the boiler (approximately 0.2 bar) has allowed to drain the ducts from the condensation and therefore the boiler is in optimum conditions for producing "dry" steam, i.e., steam lacking macroscopic suspended water droplets. At this point, the pressure in the device will increase (since all the outlets are closed) to a value that allows the operator to use the generated steam by operating the control button of the electric valve (this is usually indicated by the lighting of an appropriate indicator on the apparatus).

The second function of the valve 100, i.e., as an anti-depression valve, is as follows.

In a moment when the electric current is no longer supplying power to the resistor of the boiler 1 (the apparatus is switched off), the residual steam condenses, and due to the cooling in progress a depression is generated which draws the ball 115 contained in the valve 100 into the original position (in contact with the corresponding sealing seat 118), being assisted in this also by the very weight of the ball 115, as shown in Figure 11.

The depression in the boiler produces spontaneous suction of air from outside (at first simultaneously the axial duct 107 and the radial duct 106, due to the opening provided between the internal walls of the bush 109 and the ball 115, and then, when the ball blocks the passage 105, only through the lateral duct 106, until a pressure balance, which is indeed the intended goal, is achieved.

During this step, it is advantageous to subject the ball 115 to a non-stick surface treatment such as chemical nickel plating plus PTFE, which facilitates its separation from the gasket 112.

In practice it has been observed that the anti-depression valve according to the invention fully achieves the intended aim and objects, since said valve is provided without resorting to guiding springs that bias the gasket, to the benefit of the simplicity of the assembly operation.

Moreover, the seal provided by means of the metal ball 115 on the gasket 112 with a preset maximum degree of compression allows to subject the gasket always to a controlled deformation, to the benefit of the dimensional stability of said gasket over time.

The possibility to provide a surface treatment of the ball 115 by means of a non-stick coating further improves the sensitivity of the valve to pressure variations.

Finally, integration of the anti-depression valve in the electric valve body allows to manage a compact component that is certainly interesting commercially.

The valve thus conceived is susceptible of numerous modifications and variations, all of which are within the scope of the inventive concept; all the details may further be replaced with other technically equivalent elements.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An anti-depression valve (100), particularly for steam generation apparatuses provided with an electric valve for dispensing the generated steam, comprising a valve body (101) that is provided internally with at least one axial duct (105) and at least one radial duct (106), which lead into a chamber formed by a nipple (104) that is coupled to said valve body (101), **characterized in that**
a flow control element (115) is movable within said chamber from a position for closing said axial duct (105) to a position for opening said axial duct (105) and in contact with a gasket element (112) in said chamber, in order to close a duct (107) that is formed axially within the nipple (104);
said chamber within which said flow control element (115) is movable is formed by a bush (109) which is accommodated between said valve body (101) and said nipple (104) and forms a seat for said gasket element (112);
said bush (109) comprises a conical surface (113); and
said flow control element (115) is capable of moving from contact with said gasket element (112) until contact with said conical surface (113).

2. The valve (100) according to claim 1, **characterized in that** said bush (109) is provided with a protrusion (111) that is adapted to form said seat for said gasket element (112), said protrusion (111) comprising said conical surface (113) that is directed toward said flow control element (115).

3. The valve (100) according to one or more of the preceding claims 1-2, **characterized in that** said bush (109) is inserted between said nipple (104) and said valve body (101), with a sealing element (110) interposed between said bush (109) and said valve body (101).

4. The valve (100) according to one or more of the preceding claims, **characterized in that** said flow control element is a ball (115).

5. The valve (100) according to claim 4, **characterized in that** said ball (115) is made of metal.

6. The valve (100) according to one or more of the preceding claims 4-5, **characterized in that** said ball (115) is treated on its surface with a non-stick surface treatment.

7. The valve (100) according to claim 6, **characterized in that** said non-stick treatment is of the type of chemical nickel plating plus PTFE.

8. The valve (100) according to one or more of the preceding claims, **characterized in that** the coupling between said valve body (101) and said nipple (104) is a threaded coupling.

9. The valve (100) according to one or more of the preceding claims, **characterized in that** said valve body (101) has, at the opposite end of said nipple (104), a mechanical connector (102) for fitting to a boiler of a steam generation apparatus.

10. The valve according to one or more of the preceding claims, **characterized in that** the compression of said gasket elements by said flow control element is preset according to the maximum stroke of said flow control element against said gasket element, said sealing element being plastically deformable when it is compressed by said bush as a consequence of the tightening of said nipple on the body of said valve.

11. An electric valve, particularly for a steam generation apparatus, **characterized in that** it comprises an anti-depression valve (100) according to one or more of the preceding claims.

12. A steam generation apparatus, **characterized in that** it comprises an electric valve and an anti-depression valve (100) according to one or more of claims 1 to 10.

13. The apparatus according to claim 12, **characterized in that** said electric valve comprises said anti-depression valve (100).

## Patentansprüche

1. Ein Belüftungsventil (100), insbesondere für Dampferceugungsvorrichtungen, bereitgestellt mit einem elektrischen Ventil zur Abgabe des erzeugten Dampfs, umfassend einen Ventilkörper (101), der innerlich mit mindestens einem axialen Gang (105) und mindestens einem radialen Gang (106) bereitgestellt ist, die in eine durch einen Nippel (104) gebildete Kammer führen, der mit dem Ventilkörper (101) verbunden ist, **dadurch gekennzeichnet, dass**
ein Durchflußregelungselement (115) innerhalb der Kammer von einer Position zum Schließen des axialen Gangs (105) in eine Position zum Öffnen des axialen Gangs (105) bewegbar ist und in der Kammer mit einem Dichtungselement (112) in Kontakt steht, um einen Gang (107), der axial innerhalb des Nippels (104) ausgebildet ist, zu schließen;
die Kammer, innerhalb der das Durchflußregelungselement (115) bewegbar ist, von einer Hülse (109) gebildet ist, die zwischen dem Ventilkörper (101) und dem Nippel (104) untergebracht ist und einen Sitz für das Dichtungselement (112) bildet;
die Hülse (109) eine konische Oberfläche (113) umfasst; und
das Durchflußregelungselement (115) in der Lage ist sich vom Kontakt mit dem Dichtungselement (112) bis zum Kontakt mit der konischen Oberfläche (113) zu bewegen.

2. Das Ventil (100) gemäß Anspruch 1, **dadurch gekennzeichnet, dass** die Hülse (109) mit einer Vorwölbung (111) bereitgestellt ist, die angepasst ist, um den Sitz für das Dichtungselement (112) zu bilden, die Vorwölbung (111) eine konische Oberfläche (113) umfassend, die in Richtung des Durchflußregelungselements (115) weist.

3. Das Ventil (100) gemäß einem oder mehreren der vorhergehenden Ansprüche 1-2, **dadurch gekennzeichnet, dass** die Hülse (109) zwischen dem Nippel (104) und dem Ventilkörper (101) eingefügt ist, mit einem zwischen der Hülse (109) und dem Ventilkörper (101) eingefügten Dichtungselement (110).

4. Das Ventil (100) gemäß einem oder mehreren der vorhergehenden Ansprüche, **dadurch gekennzeichnet, dass** das Durchflußregelungselement eine Kugel (115) ist.

5. Das Ventil (100) gemäß Anspruch 4, **dadurch gekennzeichnet, dass** die Kugel (115) aus Metall hergestellt ist.

6. Das Ventil (100) gemäß einem oder mehreren der vorhergehenden Ansprüche 4-5, **dadurch gekennzeichnet, dass** die Kugel (115) an ihrer Oberfläche mit einer Antihaft-Oberflächenbehandlung behandelt ist.

7. Das Ventil (100) gemäß Anspruch 6, **dadurch gekennzeichnet, dass** die AntihaftBehandlung vom Typ der chemischen Nickelplattierung plus PTFE ist.

8. Das Ventil (100) gemäß einem oder mehreren der vorhergehenden Ansprüche, **dadurch gekennzeichnet, dass** die Verbindung zwischen dem Ventilkörper (101) und dem Nippel (104) eine verschraubte Verbindung ist.

9. Das Ventil (100) gemäß einem oder mehreren der vorhergehenden Ansprüche, **dadurch gekennzeichnet, dass** der Ventilkörper (101) am gegenüberliegenden Ende des Nippels (104) einen mechanischen Verbinder (102) zum Einpassen an einen Kessel einer Dampferzeugungsvorrichtung aufweist.

10. Das Ventil gemäß einem oder mehreren der vorhergehenden Ansprüche, **dadurch gekennzeichnet, dass** die Kompression der Dichtungselemente durch das Durchflußregelungselement gemäß dem Maximalhub des Durchflußregelungselements gegen das Dichtungselement voreingestellt ist, wobei das Dichtungselement plastisch verformbar ist, wenn es als Folge des Festziehens des Nippels auf dem Körper des Ventils durch die Hülse zusammengedrückt wird.

11. Ein elektrisches Ventil, insbesondere für eine Dampferzeugungsvorrichtung, **dadurch gekennzeichnet, dass** es ein Belüftungsventil (100) gemäß einem oder mehreren der vorhergehenden Ansprüche umfasst.

12. Eine Dampferzeugungsvorrichtung, **dadurch gekennzeichnet, dass** es ein elektrisches Ventil und ein Belüftungsventil (100) gemäß einem oder mehreren der Ansprüche 1 bis 10 umfasst.

13. Die Vorrichtung gemäß Anspruch 12, **dadurch gekennzeichnet, dass** das elektrische Ventil das Belüftungsventil (100) umfasst.

## Revendications

1. Soupape anti-dépression (100), en particulier pour des appareils de production de vapeur munis d'une électrovanne pour la distribution de la vapeur produite, comprenant un corps de soupape (101) qui est muni intérieurement d'au moins un conduit axial (105) et d'au moins un conduit radial (106) qui conduisent dans une chambre formée par un mamelon (104) qui est couplé audit corps de valve (101) **caractérisée en ce que**
un élément de contrôle de flux (115) peut être déplacé dans ladite chambre d'une position de fermeture dudit conduit axial (105) à une position d'ouverture dudit conduit axial (105) et en contact avec un élément d'étanchéité (112) dans ladite chambre, afin de fermer un conduit (107) qui est formé axialement dans le mamelon (104);
ladite chambre à l'intérieur de laquelle ledit élément de contrôle de flux (115) peut être déplacé est formée par un manchon (109) qui est logé entre ledit corps de valve (101) et ledit mamelon (104) et forme un siège pour ledit élément d'étanchéité (112);
ledit manchon (109) comprend une surface conique (113); et
ledit élément de contrôle de flux (115) est capable de se déplacer du contact avec ledit élément d'étanchéité (112) jusqu'au contact avec ladite surface conique (113).

2. Soupape (100) selon la revendication 1, **caractérisé en ce que** ledit manchon (109) est muni d'une saillie (111) qui est adaptée pour former ledit siège pour ledit élément d'étanchéité (112), ladite saillie (111) comprenant ladite surface conique (113) qui est dirigée vers ledit élément de contrôle de flux (115).

3. Soupape (100) selon une ou plusieurs des revendications précédentes 1 à 2, **caractérisée en ce que** ledit manchon (109) est inséré entre ledit mamelon (104) et ledit corps de valve (101) avec un élément d'étanchéité (110) interposé entre ledit manchon (109) et ledit corps de valve (101).

4. Soupape (100) selon une ou plusieurs des revendications précédentes, **caractérisée en ce que** ledit élément de contrôle de flux est une bille (115).

5. Soupape (100) selon la revendication 4, **caractérisée en ce que** ladite bille (115) est faite de métal.

6. Soupape (100) selon une ou plusieurs des revendications précédentes 4 à 5, **caractérisée en ce que** ladite bille (115) est traitée sur sa surface avec un traitement de surface anti-adhérent.

7. Soupape (100) selon la revendication 6, **caractérisée en ce que** ledit traitement anti-adhérent est du type placage de nickel chimique plus PTFE.

8. Soupape (100) selon une ou plusieurs des revendications précédentes, **caractérisée en ce que** le couplage entre ledit corps de valve (101) et ledit mamelon (104) est un couplage traité.

9. Soupape (100) selon une ou plusieurs des revendications précédentes, **caractérisée en ce que** ledit corps de valve (101) présente, à l'extrémité opposée dudit mamelon (104), un connecteur mécanique (102) pour le montage à une chaudière d'un appareil de production de vapeur.

10. Soupape selon une ou plusieurs des revendications précédentes, **caractérisée en ce que** la compression desdits éléments d'étanchéité par ledit élément de contrôle de flux est prédéfinie selon une course maximum dudit élément de contrôle de flux contre ledit élément d'étanchéité, ledit élément d'étanchéité étant plastiquement déformable lorsqu'il est comprimé par ledit manchon à la suite du serrage dudit mamelon sur le corps de ladite soupape.

11. Electrovanne, en particulier pour un appareil de production de vapeur, **caractérisée en ce qu'**elle comprend une soupape anti-dépression (100) selon une ou plusieurs des revendications précédentes.

12. Appareil de production de vapeur, **caractérisé en ce qu'**il comprend une électrovanne et une soupape anti-dépression (100) selon une ou plusieurs des revendications 1 à 10.

13. Appareil selon la revendication 12, **caractérisé en ce que** ladite électrovanne comprend ladite soupape anti-dépression (100).
